# DEMANDE DE BREVET EUROPEEN

(11) **EP 1 320 164 A1**
(43) Date de publication de la demande: **18.06.2003**
(21) Numéro de dépôt: 02354173.3
(22) Date de dépôt: 14.11.2002
(51) Int. Cl.: H02H 3/33

(54) **Declencheur differentiel comportant un circuit test**

(30) Priorité: 17.12.2001 FR 0116285
(71) Demandeur: Schneider Electric Industries SAS, 92500 Rueil-Malmaison (FR)
(72) Inventeur: Beranger, Bruno Schneider Electric Ind. SAS, 38050 Grenoble Cédex 09 (FR)
(74) Mandataire: Tripodi, Paul

(57) **Abrégé**

Le déclencheur différentiel comporte un transformateur (2, 4) de détection d'un courant différentiel et un relais (1) de déclenchement, constitué par une palette mobile actionnée par une bobine. Un circuit test applique à la bobine du relais des signaux de test, constitués par une tension alternative, pour provoquer une vibration de la palette du relais (1) sans provoquer de déclenchement. L'aptitude de la palette à se décoller est contrôlée par un capteur piézo-électrique (7) collé sur le relais. Une séquence de test comporte de préférence une première phase dans laquelle l'amplitude des signaux de test augmente progressivement (12, A1) et qui se termine lorsque les signaux de sortie du capteur (7) dépassent un seuil prédéterminé. Si la première phase dépasse une durée prédéterminée, le relais est considéré comme défaillant. En l'absence de défaillance du relais, l'amplitude des signaux de test diminue progressivement pendant une seconde phase de la séquence de test.

## Description

### Domaine technique de l'invention

L'invention concerne un déclencheur différentiel comportant des moyens de mesure d'un courant différentiel connectés à un relais de déclenchement qui comporte une bobine et une palette mobile, des moyens de test comportant des moyens destinés à appliquer aux bornes de la bobine, pendant une séquence de test, des signaux de test constitués par une tension alternative pour provoquer une vibration de la palette, sans entraîner le déclenchement du déclencheur, et des moyens de contrôle destinés à contrôler l'aptitude de la palette à se décoller.

### État de la technique

Les déclencheurs différentiels comportent classiquement un bouton de test permettant de simuler un défaut différentiel lorsqu'il est actionné et, ainsi, de tester le déclencheur. Ce type de test nécessite périodiquement une intervention manuelle et provoque le déclenchement de l'appareil, interrompant de ce fait la continuité du réseau électrique à protéger. Dans la pratique, de nombreux déclencheurs différentiels ne sont jamais testés et leur fiabilité ne peut donc être garantie.

Le brevet EP 815630 décrit un déclencheur différentiel comportant un circuit test permettant un autotest périodique et automatique du relais du déclencheur. Le test consiste à engendrer une vibration de la palette du relais, sans provoquer de déclenchement, par application de signaux de tension en forme de créneaux aux bornes de la bobine du relais. L'aptitude de la palette du relais à se décoller, qui garantit le bon fonctionnement du relais, est contrôlée soit par détection d'une surtension aux bornes de la bobine, soit par détection d'une variation brusque du courant dans le circuit test, variation représentative d'une variation brusque de self aux bornes de la bobine. En effet, le déplacement de la palette provoque un entrefer dans le circuit magnétique du relais et, en conséquence, une modification de la réluctance du circuit et, donc, une déformation du courant d'excitation traversant la bobine en fonction de l'état, collé ou non, de la palette.

Cependant, avec certains relais, l'écart entre les courbes de courant circulant dans la bobine du relais, respectivement collé et non collé, est trop faible pour être significatif.

### Objet de l'invention

L'invention a pour but de remédier aux inconvénients des tests des déclencheurs différentiels connus et, plus particulièrement, de permettre de tester l'aptitude de la palette du relais du déclencheur à se décoller quelles que soient les caractéristiques du relais utilisé.

Selon l'invention, ce but est atteint par le fait que les moyens de contrôle comportent des moyens de détection mécanique de la vibration de la palette pendant la séquence de test.

Selon un développement de l'invention, les moyens de détection mécanique de la vibration de la palette comportent des moyens de détection piézo-électriques en contact avec le relais.

Selon un autre développement de l'invention, les moyens destinés à appliquer une tension alternative comportent des moyens pour augmenter progressivement l'amplitude des signaux de test pendant une première phase de la séquence de test.

Ils peuvent également comporter des moyens pour diminuer progressivement l'amplitude des signaux de test pendant une seconde phase de la séquence de test.

Selon une autre caractéristique de l'invention, les moyens de contrôle comportent des moyens de comparaison pour comparer les signaux de sortie des moyens de détection piézo-électriques à un seuil prédéterminé, le dépassement du seuil provoquant la fin de la première phase de la séquence de test.

Le déclencheur comporte, de préférence, des moyens de signalisation d'un relais défectueux, les moyens de contrôle comportant des moyens d'actionnement des moyens de signalisation lorsque la première phase de la séquence de test dépasse une durée prédéterminée.

### Description sommaire des dessins

D'autres avantages et caractéristiques ressortiront plus clairement de la description qui va suivre de modes particuliers de réalisation de l'invention donnés à titre d'exemples non limitatifs, et représentés aux dessins annexés, dans lesquels :
La figure 1 représente un mode particulier de réalisation d'un déclencheur selon l'invention.
Les figures 2a à 2c, 3a à 3c et 4a à 4c illustrent les formes d'onde de divers signaux dans un déclencheur selon l'invention.
La figure 5 représente un mode particulier de réalisation d'un organigramme pouvant être mis en oeuvre dans un déclencheur selon la figure 1.
Les figures 6a à 6d et 7a à 7d illustrent les formes d'onde de divers signaux dans un déclencheur mettant en oeuvre l'organigramme selon la figure 5, respectivement dans le cas où le relais du déclencheur fonctionne correctement et dans le cas d'un relais défectueux.

### Description de modes particuliers de réalisation.

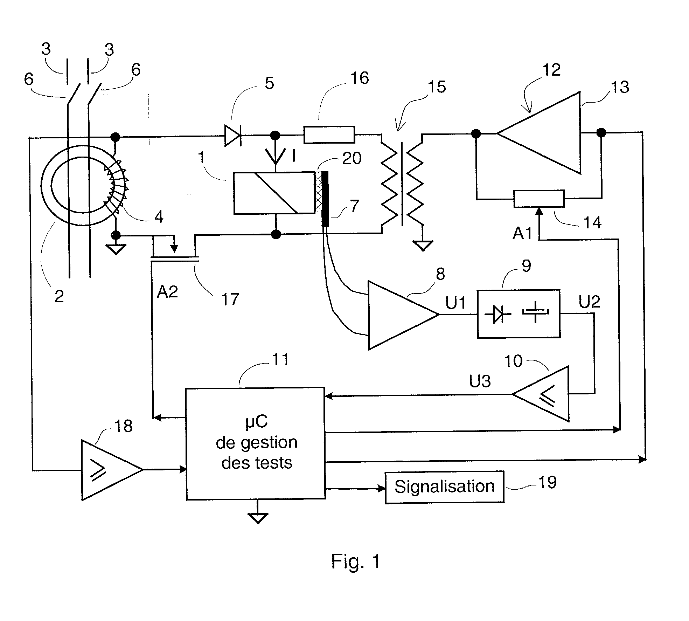

Le déclencheur différentiel représenté à la figure 1 comporte, classiquement, un transformateur de détection d'un courant différentiel et un relais 1 de déclenchement, constitué par une palette mobile actionnée par une bobine. Le primaire du transformateur a classiquement la forme d'un tore 2 entourant les conducteurs 3 du réseau électrique à protéger. L'enroulement secondaire 4 du transformateur est connecté, en série avec une diode de redressement 5, à la bobine du relais 1. La détection d'un courant différentiel supérieur à un seuil de déclenchement prédéterminé provoque l'excitation du relais 1, le déplacement de la palette du relais et l'ouverture des contacts 6 d'un organe de coupure.

Le déclencheur comporte un circuit de test destiné à tester le bon fonctionnement du relais de déclenchement qui constitue le maillon le moins fiable du déclencheur différentiel. En effet, la grande majorité des pannes est due au collage de la palette du relais de déclenchement. Comme dans le brevet EP 815630, le circuit test réalise un test périodique et automatique du relais, sans provoquer le déclenchement de manière à ne pas interrompre la continuité de service dans l'installation électrique. Pour cela, pendant une séquence de test, une tension alternative, d'amplitude et de fréquence contrôlées, est appliquée aux bornes de la bobine du relais 1 de manière à provoquer une vibration de la palette, sans entraîner le déclenchement, et le circuit test contrôle l'aptitude de la palette à se décoller.

Le circuit test du déclencheur selon l'invention permet une détection mécanique de la vibration de la palette pendant la phase de test, ce qui permet de tester n'importe quel type de relais. La détection mécanique de la vibration de la palette du relais s'effectue, de préférence, au moyen d'un détecteur piézo-électrique en contact avec le relais. Dans le mode de réalisation représenté à la figure 1, un capteur piézo-électrique 7 est fixé, de préférence par de la colle 20, sur le boîtier du relais 1. La vibration de la palette se propage, de façon acoustique, dans le relais et un capteur piézo-électrique collé sur une paroi du relais est suffisamment sensible pour obtenir, en sortie du capteur, un signal électrique mesurable représentatif de la vibration de la palette. Dans un mode de réalisation préférentiel, le capteur piézo-électrique 7 est collé directement sur la palette du relais 1. Dans ce cas, l'amplitude des signaux électriques de sortie du capteur piézo-électrique est plus de trois fois supérieure à celle des signaux fournis par un capteur piézo-électrique collé sur le boîtier, ce qui permet d'améliorer de façon importante le rapport signal / bruit du circuit test, le rendant ainsi moins sensible à d'éventuelles vibrations parasites.

Sur la figure 1, les signaux de sortie du capteur piézo-électrique 7 sont appliqués à l'entrée d'un amplificateur 8, par exemple de gain 200. Les signaux amplifiés U1 sont ensuite redressés, par un redresseur double alternance, et filtrés dans un circuit 9 de redressement et de filtrage, de manière à fournir une tension continue U2 dont l'amplitude est représentative de la vibration de la palette. La fréquence des signaux de sortie du capteur piézo-électrique 7 étant typiquement de l'ordre de 11,5kHz, le filtre a de préférence une constante de temps de l'ordre de 10ms, ce qui permet d'obtenir un bon lissage des signaux redressés. Les signaux U2 de sortie du circuit 9 sont appliqués à l'entrée d'un comparateur 10 qui bascule lorsque l'amplitude des signaux U2 dépasse un seuil S prédéterminé. Le signal U3 de sortie du comparateur 10 est appliqué sur une entrée d'un microcontrôleur 11 de gestion des tests.

Le microcontrôleur 11 contrôle également l'application des signaux de test, constitués par une tension alternative, aux bornes de la bobine du relais 1. Dans le mode de réalisation de la figure 1, le microcontrôleur 11 génère, pendant une séquence de test, un signal de tension carré dont la fréquence est comprise entre 100Hz et 10kHz, de préférence de l'ordre de 1500Hz par exemple. Ce signal, variant initialement entre 0 et 5Vpar exemple, est, de préférence, symétrisé par rapport à zéro, par exemple par un comparateur (non représenté), de manière à varier entre -5V et +5V. Le signal symétrisé est appliqué à l'entrée d'un amplificateur 12 à gain variable et à fort courant de sortie. L'amplificateur 12 est, par exemple, constitué par un amplificateur opérationnel 13 avec un potentiomètre numérique 14 connecté entre son entrée et sa sortie et piloté par un signal de commande A1 du microcontrôleur. Le microcontrôleur peut ainsi ajuster le gain G de l'amplificateur 12.

La sortie de l'amplificateur 12 est connectée directement à l'enroulement primaire d'un transformateur - élévateur 15, dont l'enroulement secondaire est connecté en parallèle avec la bobine du relais 1 de déclenchement de manière à lui appliquer les signaux de test. Le transformateur 15 garantit l'absence totale de composante continue sur les signaux de test appliqués à la bobine du relais 1. Une résistance 16, de forte valeur, par exemple de 470kΩ, est insérée en série avec l'enroulement secondaire du transformateur 15 aux bornes de la bobine du relais 1. La résistance 16 évite ainsi d'affaiblir la sensibilité du déclencheur différentiel par la mise en parallèle directe de la bobine du relais et de l'enroulement secondaire du transformateur 15. Pendant une séquence de test, la résistance 16 ne diminue guère les signaux de test car, à la fréquence des signaux de test (de l'ordre de 1500Hz par exemple), son impédance reste faible devant celle de la bobine du relais.

Le déclencheur représenté à la figure 1 comporte, en outre, un transistor 17, de type MOSFET à appauvrissement, connecté en série avec la bobine du relais 1 à la sortie de l'enroulement secondaire 4 du transformateur de détection d'un courant différentiel. Le microcontrôleur 11 applique un signal de blocage A2 à l'électrode de commande du transistor 17 de manière à bloquer le transistor 17 pendant une séquence de test. Ainsi, le secondaire 4 du tore 2 ne peut pas provoquer d'interférence parasite pendant une séquence de test. En l'absence de tension, le transistor 17 reste passant, ce qui permet de conserver l'alimentation à propre courant du déclencheur différentiel en dehors des séquences de test. Le circuit test est, quant à lui, alimenté par une source d'énergie auxiliaire (non représentée).

Un comparateur 18 est, de préférence, connecté aux bornes de l'enroulement secondaire 4 du transformateur de détection d'un courant différentiel. La sortie du comparateur 18 est connectée à une entrée du microcontrôleur 11. Si un défaut différentiel survient pendant une séquence de test, le microcontrôleur 11 interrompt la séquence de test et le blocage, par le signal A2, du transistor 17. Ainsi, le déclencheur différentiel reste opérationnel même pendant une séquence de test.

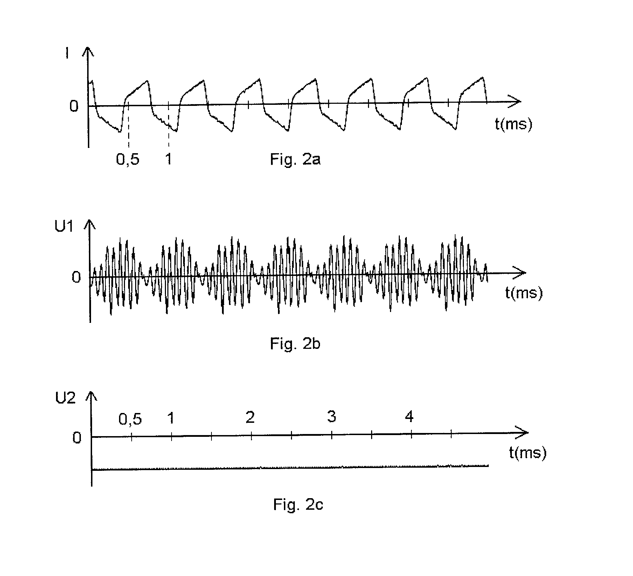

La figure 2a représente un courant de test I parcourant la bobine du relais pendant une séquence de test et provoquant une vibration de la palette du relais à la limite du déclenchement. Les figures 2b et 2c représentent respectivement, le signal amplifié U1 (sortie de l'amplificateur 8) correspondant mesuré à la sortie du capteur piézo-électrique 7 et le signal U2 correspondant obtenu à la sortie du circuit 9 de redressement et de filtrage. Dans cet exemple, le relais fonctionne correctement, c'est-à-dire que la palette n'est pas collée et vibre, sans provoquer de déclenchement, lors de l'application du courant de test. Le gain de l'amplificateur 12 est constant et la tension appliquée aux bornes de l'enroulement primaire du transformateur - élévateur 5 est une tension carrée de 1,4kHz. On peut observer dans le signal amplifié U1 les modes de résonance propre du capteur piézo-électrique (11,5kHz), modulés par la vibration du relais. Dans cet exemple, le signal U2, obtenu par redressement, filtrage et inversion du signal amplifié U1, est un signal négatif continu (figure 2c), de l'ordre de quelques volts.

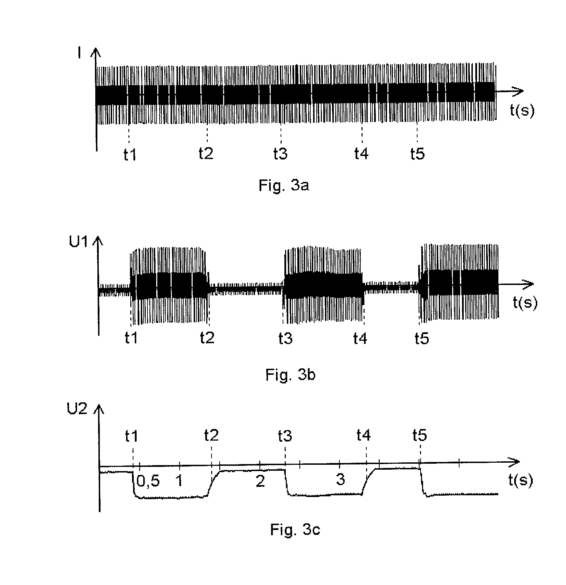

Les figures 3a, 3b et 3c permettent de mettre en évidence les variations des signaux en présence et en l'absence du collage de la palette. Elles représentent respectivement les signaux I, U1 et U2 pendant une séquence de test, pendant laquelle la palette du relais est alternativement collée (avant l'instant t1, entre t2 et t3 et entre t4 et t5) et non collée (entre t1 et t2, entre t3 et t4 et après l'instant t5). En l'absence de collage de la palette, les signaux sont du même type que sur les figures 2a à 2c. Par contre, lorsque la palette est collée, les signaux U1 et U2 sont pratiquement nuls. La comparaison du signal U2 à un seuil prédéterminé permet, en conséquence, de distinguer facilement un relais collé d'un relais non collé.

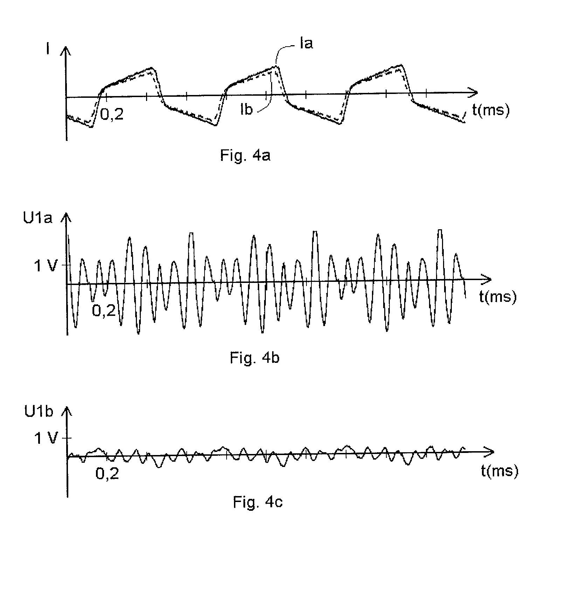

Les figures 4a, 4b et 4c mettent en évidence l'importance de l'amplitude des signaux de test. En effet, la figure 4a représente un premier courant de test la, provoquant une vibration de la palette à la limite du déclenchement, et, en pointillé, un second courant de test Ib, d'amplitude légèrement inférieure. Les courbes U1a (figure 4b) et U1b (figure 4c) des signaux amplifiés correspondants ont des amplitudes très différentes, le courant de test Ib n'entraînant qu'une faible vibration de la palette du relais. Ainsi, une faible variation du courant de test I parcourant la bobine du relais entraîne une forte variation de la vibration de la palette du relais. La non-linéarité du circuit test est donc importante.

Pour assurer une bonne fiabilité du circuit test, le niveau d'excitation du relais pendant une séquence de test est, de préférence, ajusté non pas en fonction du courant I circulant dans la bobine mais en fonction de l'amplitude des vibrations détectées par le capteur piézo-électrique 7. Ceci peut être réalisé, dans le déclencheur selon la figure 1, par le contrôle du gain de l'amplificateur 12 par le microcontrôleur 11 en fonction des signaux U3, représentatifs de l'amplitude des vibrations de la palette mesurées par le capteur piézo-électrique 7.

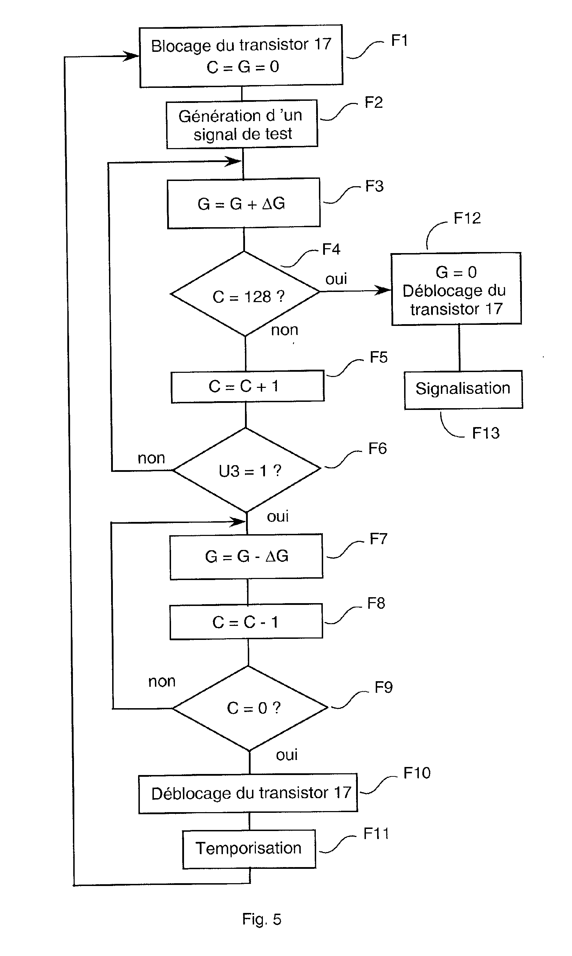

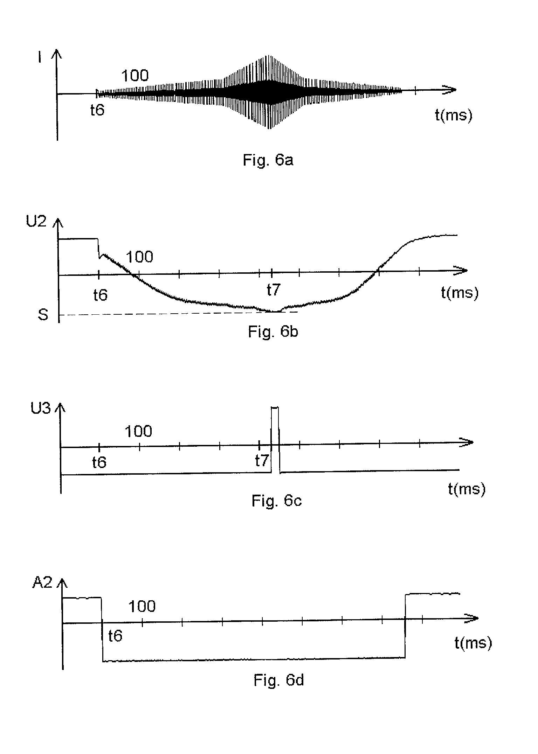

L'organigramme de la figure 5 et les figures 6a à 6d (palette non collée) et 7a à 7d (palette collée) illustrent le déroulement d'une séquence de test dans un déclencheur selon la figure 1, dans lequel le niveau d'excitation du relais est contrôlé en fonction de l'amplitude des vibrations détectées.

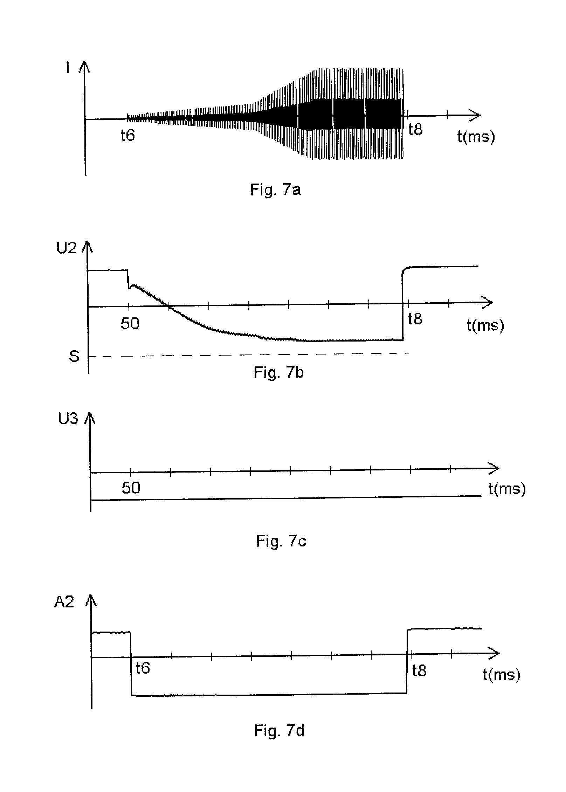

Dans une première étape F1, le microcontrôleur bloque le transistor 17, à un instant t6 correspondant au début d'une séquence de test, par application d'une tension A2 prédéterminée, négative dans l'exemple illustré aux figures 6d et 7d. Simultanément, il met à zéro le contenu d'un compteur de boucles (C = 0) et le gain de l'amplificateur 12 (G = 0). Puis, dans une étape F2, il provoque l'application de signaux de test à la bobine du relais. Pour cela, il génère un signal de test constitué par un signal de tension carré (signal binaire), symétrisé entre +5V et -5V, de fréquence prédéterminée (par exemple 1500Hz), et l'applique à l'entrée de l'amplificateur 12. Le microcontrôleur augmente ensuite progressivement l'amplitude du signal de tension appliqué aux bornes de la bobine du relais en augmentant progressivement le gain G de l'amplificateur 12, par l'intermédiaire du potentiomètre 14. Une augmentation ΔG du gain est donc réalisée dans une étape F3 (G = G + ΔG). Dans une étape F4, le microcontrôleur vérifie si le contenu du compteur de boucles a atteint un seuil prédéterminé, 128 dans l'exemple représenté (C = 128 ?). Si ce n'est pas le cas (sortie non de F4) le microcontrôleur incrémente, dans une étape F5, le contenu du compteur de boucles (C = C + 1). Il vérifie ensuite, dans une étape F6, si l'amplitude des vibrations détectées dépasse un seuil prédéterminé. Pour cela, il vérifie par exemple la valeur du signal binaire U3 de sortie du comparateur 10 (U3 = 1 ?). Comme représenté aux figures 6c et 7c, le signal U3 prend une première valeur binaire, notée 0, correspondant à une valeur négative, tant que les signaux U2 (figures 6b et 7b), négatifs, n'atteignent pas un seuil S, négatif, prédéterminé. Le signal U3 prend une seconde valeur binaire, notée 1, correspondant à une valeur positive (figure 6c), lorsque les signaux U2 (figure 6b), négatifs, atteignent le seuil S. Si le seuil n'est pas atteint (sortie non de F6), le microcontrôleur se reboucle sur l'étape F3, augmentant ainsi progressivement, pendant une première phase de la séquence de test, le gain de l'amplificateur 12 et, en conséquence, l'amplitude des signaux de test I appliqués à la bobine du relais (figures 6a et 7a).

Lorsque le relais est en bon état, c'est-à-dire lorsque la palette n'est pas collée (figures 6a à 6d), l'amplitude des signaux I et U2 augmente jusqu'à un instant t7 où le signal U2 atteint le seuil S. Le signale U3 bascule alors et prend la valeur binaire 1. Dans ce cas (sortie oui de F6) le microcontrôleur met fin à la première phase de la séquence de test. Le test pourrait se terminer à cet instant. Cependant, une interruption brutale des signaux, d'amplitude importante, appliqués aux bornes de la bobine du relais conduirait à l'existence d'un champ rémanent dans le circuit magnétique du relais 1 et risquerait de perturber fortement la sensibilité du déclencheur différentiel.

Pour écarter ce problème, le microcontrôleur 11 commence alors une deuxième phase pendant laquelle il diminue progressivement l'amplitude des signaux de test. Il diminue donc progressivement le gain G de l'amplificateur 12, par l'intermédiaire du potentiomètre 14. Une diminution ΔG du gain est donc réalisée dans une étape F7 (G = G - ΔG). Puis, dans une étape F8, le microcontrôleur décrémente le contenu du compteur de boucles (C = C -1) et, dans une étape F9, il vérifie si le contenu du compteur de boucles est revenu à zéro (C = 0 ?). Si ce n'est pas le cas (sortie non de F9), il se reboucle sur l'étape F7, de manière à continuer la diminution progressive de l'amplitude des signaux de test appliqués à la bobine du relais. Pour un relais en bon état, le test se termine lorsque le contenu du compteur de boucles est ramené à zéro (sortie oui de F9). Après déblocage du transistor 17, dans une étape F10, et temporisation dans une étape 11, le microcontrôleur se reboucle sur l'étape F1 pour une nouvelle séquence de test. La durée de la temporisation entre deux séquences de test peut être quelconque, par exemple de l'ordre d'une semaine.

Si la palette du relais est collée, l'amplitude des vibrations reste trop faible pour que le signal U2 atteigne le seuil S (figure 7b) et le signal U3 ne bascule pas (figure 7c). Elle atteint un maximum qu'elle ne peut dépasser (figure 7b) même si le gain de l'amplificateur 12 continue à augmenter jusqu'à saturation (figure 7a). Lorsque le microcontrôleur constate, à l'étape F4, que le contenu du compteur de boucles a atteint la valeur 128 (sortie oui de F4), cela signifie que la palette est collée et le relais est considéré comme défaillant. Le microcontrôleur remet alors à zéro le gain de l'amplificateur 12 (G = 0), dans une étape F12, et signale le défaut, dans une étape F13. Comme représenté sur les figures 5 et 7d, le microcontrôleur 11 peut également débloquer le transistor 17 pendant l'étape F12. La signalisation du défaut peut être réalisée par tout circuit de signalisation 19 (figure 1) approprié, par exemple par une diode électroluminescente, sous le contrôle du microcontrôleur 11.

Ainsi, le microcontrôleur augmente l'amplitude des signaux de test jusqu'à ce qu'une vibration d'amplitude suffisante soit détectée ou jusqu'à une valeur maximale prédéfinie, correspondant aux 128 boucles d'incrémentation, pour laquelle tout relais en bon état devrait déclencher. Si cette valeur maximale est atteinte sans qu'une vibration d'amplitude suffisante soit détectée, alors le relais est considéré comme étant défaillant, le test est interrompu (instant t8 sur les figures 7a à 7d) et cette défaillance est signalée. Le niveau de vibration à atteindre se situe légèrement en dessous du seuil de déclenchement du relais. Il ne doit cependant pas être trop faible pour que le niveau du signal à mesurer soit largement supérieur au niveau de bruit ambiant et tenir compte de la disparité des caractéristiques des relais et des capteurs piézo-électriques.

Une séquence de test du type décrit ci-dessus dure environ 400ms. Dans certains cas, cette durée peut être considérée comme excessive. Il est possible de la réduire en commençant l'excitation du relais, dans la première phase de la séquence, avec le curseur du potentiomètre 14 en position médiane. Le gain de l'amplificateur ne varie alors pas entre zéro et une valeur maximale, mais entre une valeur médiane et la valeur maximale. La croissance et la décroissance de l'amplitude des signaux de test peuvent ainsi être beaucoup plus rapide et la durée d'une séquence de test ramenée à environ 100ms. La suppression de la seconde phase de la séquence de test permettrait également de réduire la durée du test, mais le noyau métallique du relais peut alors rester magnétisé. L'augmentation de la fréquence des signaux de test engendrerait, quant à elle, une augmentation de la tension aux bornes de la bobine du relais très au-delà de 100V, posant alors des problèmes d'isolation.

Pour réduire l'influence de la sensibilité du capteur piézo-électrique aux vibrations parasites, il est possible d'effectuer une mesure de bruit de fond avant de lancer une séquence de test. Par ailleurs, le microcontrôleur peut également extraire le fondamental de l'enveloppe des signaux de sortie des moyens de détection piézo-électriques.

## Revendications

1. Déclencheur différentiel comportant des moyens (2, 4) de mesure d'un courant différentiel connectés à un relais (1) de déclenchement qui comporte une bobine et une palette mobile, des moyens de test comportant des moyens destinés à appliquer aux bornes de la bobine, pendant une séquence de test, des signaux de test constitués par une tension alternative pour provoquer une vibration de la palette, sans entraîner le déclenchement du déclencheur, et des moyens de contrôle destinés à contrôler l'aptitude de la palette à se décoller, déclencheur **caractérisé en ce que** les moyens de contrôle comportent des moyens de détection mécanique de la vibration de la palette pendant la séquence de test.

2. Déclencheur selon la revendication 1, **caractérisé en ce que** les moyens de détection mécanique de la vibration de la palette comportent des moyens de détection piézo-électriques (7) en contact avec le relais (1).

3. Déclencheur selon la revendication 2, **caractérisé en ce que**, le relais (1) comportant un boîtier, les moyens de détection piézo-électriques (7) comportent un capteur piézo-électrique collé sur le boîtier du relais (1).

4. Déclencheur selon la revendication 2, **caractérisé en ce que** les moyens de détection piézo-électriques (7) comportent un capteur piézo-électrique collé sur la palette du relais (1).

5. Déclencheur selon l'une quelconque des revendications 2 à 4, **caractérisé en ce que** les moyens destinés à appliquer une tension alternative comportent des moyens (12, A1, F3) pour augmenter progressivement l'amplitude des signaux de test pendant une première phase de la séquence de test.

6. Déclencheur selon l'une quelconque des revendications 2 à 5, **caractérisé en ce que** les moyens destinés à appliquer une tension alternative comportent des moyens (12, A1, F7) pour diminuer progressivement l'amplitude des signaux de test pendant une seconde phase de la séquence de test.

7. Déclencheur selon l'une des revendications 5 et 6, **caractérisé en ce que** les moyens de contrôle comportent des moyens de comparaison (10, F6) pour comparer les signaux de sortie des moyens de détection piézo-électriques à un seuil prédéterminé, le dépassement du seuil provoquant la fin de la première phase de la séquence de test.

8. Déclencheur selon l'une quelconque des revendications 5 à 7, **caractérisé en ce qu'**il comporte des moyens (19) de signalisation d'un relais (1) défectueux, les moyens de contrôle comportant des moyens (F13) d'actionnement des moyens de signalisation lorsque la première phase de la séquence de test dépasse une durée prédéterminée.

9. Déclencheur selon l'une quelconque des revendications 2 à 8, **caractérisé en ce que** les moyens de contrôle comportent des moyens d'extraction du fondamental de l'enveloppe des signaux de sortie des moyens de détection piézo-électriques.

10. Déclencheur selon l'une quelconque des revendications 1 à 8, **caractérisé en ce qu'**il comporte un transistor (17), de type MOSFET à appauvrissement, connecté en série avec la bobine du relais à la sortie des moyens de mesure d'un courant différentiel et bloqué par les moyens de test pendant la séquence de test.
